# FASCICULE DE BREVET EUROPEEN

(11) **EP 0 682 625 B1**
(45) Date de publication et mention de la délivrance du brevet: **30.12.1998**
(21) Numéro de dépôt: 94906255.8
(22) Date de dépôt: 09.02.1994
(51) Int. Cl.: B65D 41/34

(54) **DISPOSITIF DE BOUCHAGE POUR RECIPIENT**
BEHÄLTERVERSCHLUSS
CONTAINER CLOSURE DEVICE

(30) Priorité: 09.02.1993 FR 9301410; 10.06.1993 FR 9307012
(43) Date de publication de la demande: 22.11.1995
(73) Titulaire: LE MOULAGE AUTOMATIQUE (Société anonyme), F-02400 Château-Thierry (FR)
(72) Inventeur: CARVALHEIRO, José, F-75012 Paris (FR); FRANCHET, Alain, F-02400 Brasles (FR); GUERRAZZI, Vincent, F-01500 Ambérieu-en-Bugey (FR); PELLERANO, Pierre, F-75010 Paris (FR)
(74) Mandataire: Derambure, Christian
(86) Numéro de dépôt international: FR9400145
(87) Numéro de publication internationale: WO9418085

(56) Documents cités:
- EP-A- 0 096 351
- EP-A- 0 133 348
- EP-A- 0 306 259
- EP-A- 0 458 250
- FR-A- 2 549 806
- US-A- 4 741 447
- US-A- 4 890 754

## Description

La présente invention concerne un dispositif de bouchage pour récipient, selon le préambule de la revendication 1 (US-A-4 890 754).

La demande de brevet français n° 93 01 410 décrit déjà un dispositif de bouchage pour récipient à goulot fileté comprenant un bouchon taraudé dont la partie inférieure est rattachée à une bande d'inviolabilité par une zone de liaison à faible résistance mécanique ; ladite bande présentant un jonc annulaire interne élastiquement déformable, destiné à venir s'encliqueter sous une collerette d'accrochage ménagée à la périphérie inférieure dudit goulot par vissage forcé du bouchon et un bossage périphérique externe séparé dudit jonc par une zone à déformation élastique contrôlée.

Cependant, lorsque la bande est immobilisée du fait que le jonc est en butée d'appui sur la collerette du récipient et que le vissage se poursuit, il se produit une compression et un déplacement relatif du bouchon par rapport à la bande qui provoque la rupture de la zone de liaison à faible résistance mécanique avant que le jonc ne soit passé sous la collerette.

Or, pour parfaire l'inviolabilité, il est souhaitable de réaliser un jonc interne très en saillie tout en fragilisant au maximum la zone de liaison pour garantir l'évidence de la première ouverture tout en la facilitant. Le document EP 96 351 décrit un système de bouchage comprenant un bouchon, une bague d'inviolabilité et des pontets reliant le bouchon à la bague d'inviolabilité. A l'extrémité libre inférieure de la jupe latérale du bouchon, des échancrures ou des éléments formant saillie sont disposés.

Ces échancrures ou ces éléments formant saillie sont destinés à coopérer avec des éléments formant saillie ou respectivement des échancrures ménagés sur le bord supérieur de la bague d'inviolabilité.

Les pontets sont inclinés par rapport à l'axe longitudinal du bouchon.

Le sens de vissage, respectivement de dévissage du bouchon décrit dans le document EP 96 351 est déterminé par la géométrie des pontets, ce qui conduit à un surcoût de production dès lors que l'on souhaite fabriquer des bouchons conventionnels et des bouchons de sécurité à sens de dévissage inverse.

La géométrie des pontets décrits dans le document EP 96 351 est telle que lors de la mise en place du bouchon, ils se déforment par une flexion double liée à leur écrasement entre la bague d'inviolabilité et la jupe latérale du bouchon et au pivotement de la bague lors du passage de la collerette au récipient.

De sorte que les pontets décrits dans le document EP 96 351 peuvent être rompus de manière prématurée lors de la mise en place du bouchon sur le récipient.

Le document US 4 890 754 décrit un système de bouchage comprenant un bouchon, une bague d'inviolabilité et des pontets reliant le bouchon à la bague d'inviolabilité.

Les pontets sont prévus sur la face interne du dispositif de bouchage pour des raisons de fabrication.

Pour éviter la rupture de ces pontets, des ponts de grande dimension sont prévus à l'extérieur du dispositif de bouchage.

La réalisation de ces ponts de grande dimension à l'extérieur du dispositif de bouchage montre que les pontets internes sont de structure fragile et doivent être renforcés par des ponts externes, d'ou une structure plus complexe à mettre en oeuvre et plus coûteuse.

La présente invention a pour but de résoudre les problèmes techniques précédents de manière satisfaisante.

Ce but est atteint conformément à l'invention au moyen d'un dispositif de bouchage tel que précédemment décrit et dans lequel la face supérieure du bossage et le bord inférieur de la paroi latérale du bouchon comportent au moins une dent et/ou au moins un créneau ; ladite dent étant destinée à venir se loger temporairement dans ledit créneau lors du vissage quand ledit jonc est en butée sur la collerette d'accrochage pour éviter tout déplacement relatif du bouchon par rapport à la bande et assurer la transmission de l'effort d'encliquetage sans détérioration de la zone de liaison.

Selon une caractéristique avantageuse de l'invention, la largeur de la face supérieure du jonc est supérieure ou égale à la largeur de la collerette du récipient.

De plus, la face supérieure du jonc est sensiblement normale à l'axe du bouchon.

Selon une autre caractéristique, la zone à déformation contrôlée possède une face interne ayant une courbure et/ou une inclinaison par rapport à l'axe du bouchon.

Selon encore une autre caractéristique, la face inférieure interne dudit jonc est inclinée d'un angle α par rapport à l'axe du bouchon de telle sorte que la déformation contrôlée de la zone déformable se traduise par un fléchissement et un resserrement de la partie inférieure de la bande vers l'axe du goulot.

La face inférieure interne du jonc comporte une ligne d'inflexion.

Eventuellement, le pourtour du jonc comporte une ou plusieurs interruptions.

Les dimensions de la dent et/ou du créneau ainsi que leur jeu latéral respectif sont déterminés de façon à ce que la face latérale arrière de la dent, en référence au sens du vissage, pénètre au moins partiellement dans ledit créneau et soit en appui contre la face latérale arrière dudit créneau avant d'atteindre la valeur limite de la résistance à la traction de la zone de liaison.

Par ailleurs, les nombres et la répartition des dents et des créneaux ainsi que leur jeu vertical respectif sont déterminés en fonction de la résistance mécanique de la zone de liaison et de leur surface horizontale de contact d'appui mutuel, nécessaire à la transmission de l'effort vertical d'encliquetage.

Le dispositif de bouchage de l'invention peut être fabriqué facilement par moulage à injection sans soulever de difficultés au démoulage par dégagement transversal des parties moulantes. Le montage du bouchon taraudé par vissage forcé ne détruit pas la zone de liaison entre le bouchon et la bande d'inviolabilité.

Dans ces conditions, on peut fragiliser d'autant plus cette zone de liaison, par exemple en réalisant un nombre plus réduit de pontets. et/ou en réduisant leur section et leur hauteur.

De plus, l'inviolabilité est renforcée par la présence d'un jonc interne suffisamment large et très en saillie.

La présente invention sera mieux comprise à la lecture de la description qui va suivre accompagnée des dessins sur lesquels :
- la figure 1 représente une vue en perspective partielle du dispositif de l'invention ;
- la figure 2 représente une vue en coupe partielle du dispositif de la figure 1 ;
- les figures 3a, 3b,3c et 3d représentent des vues en perspective du dispositif de l'invention dans des positions différentes lors du vissage sur la ligne de remplissage du récipient ; et,
- les figures 4, 5 et 6 représentent d'autres modes de réalisation de l'invention.

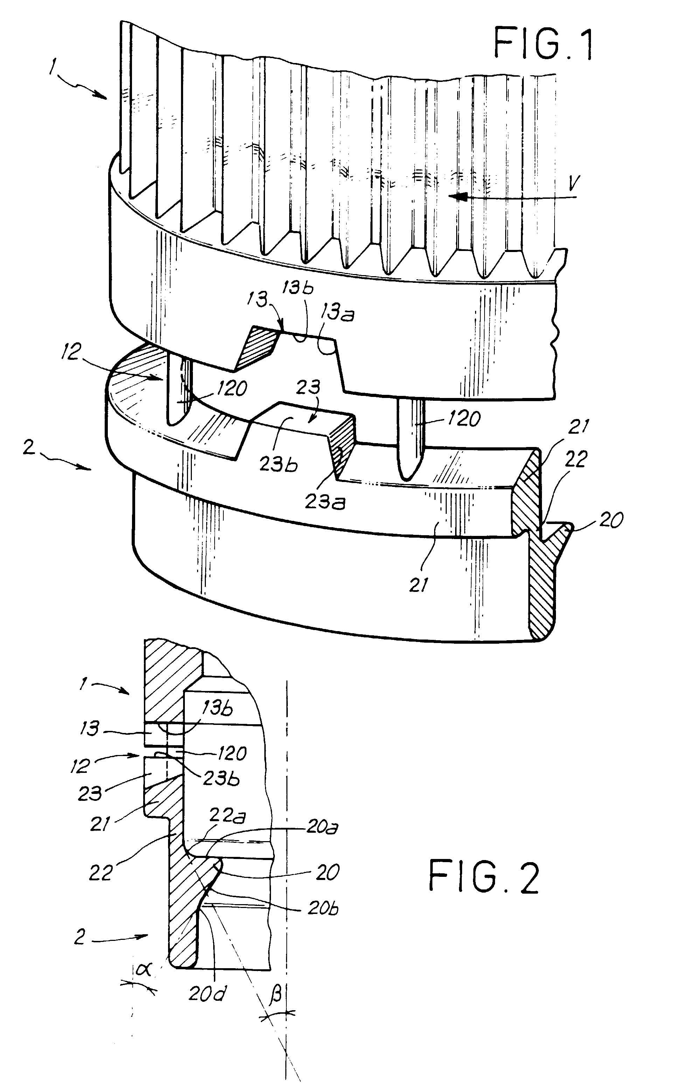

Les figures 1 et 2 représentent le dispositif de bouchage de l'invention. Ce dispositif est destiné à être monté sur le goulot fileté d'un récipient (non représenté).

Le dispositif de bouchage comprend un bouchon taraudé 1 prolongé en partie inférieure par une bande ou bague d'inviolabilité détachable 2 rattachée au bouchon 1 par une zone de liaison 12 à faible résistance mécanique.

Le caractère fragile de cette zone de liaison peut être obtenu, après le moulage par découpe ultérieure ou dès le moulage du bouchon.

La zone de liaison 12 est de préférence constituée de pontets 120 espacés sur la périphérie de la zone de liaison 12. Ces pontets peuvent être réalisés par découpe d'une bande résistante moulée ou bien par moulage direct d'éléments fragiles.

Le dispositif est monté sur le goulot fileté du récipient par vissage forcé jusqu'à encliquetage et serrage approprié.

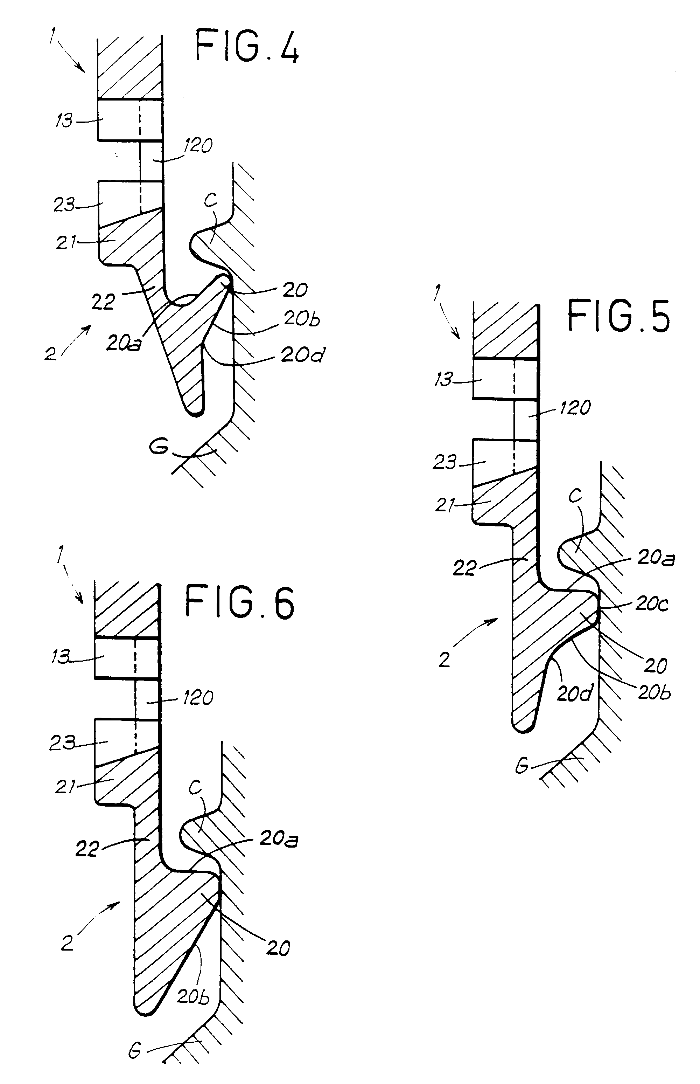

La bande 2 présente un jonc annulaire interne 20 de retenue sur une collerette d'accrochage C ménagée à la périphérie inférieure du goulot G du récipient (représentée sur les figures 4, 5 et 6).

Le jonc 20 peut éventuellement comporter une ou plusieurs interruptions sur son pourtour.

La face supérieure 20a du jonc 20 est, au repos, sensiblement normale à l'axe du bouchon 1 tandis que sa face inférieure interne 20b est inclinée d'un angle α par rapport à l'axe dudit bouchon.

La face inférieure interne 20b comporte une ligne d'inflexion 20d dont la position est déterminée en fonction de la valeur de l'angle α. La bande 2 comporte également un bossage périphérique externe 21 séparé du jonc 20 par une zone à déformation contrôlée 22. La zone à déformation élastique contrôlée 22 possède une face interne 22a ayant une courbure et/ou une inclinaison d'angle (β) par rapport à l'axe du bouchon.

L'angle α entre la face inférieure interne du jonc 20 et l'axe vertical du bouchon est fonction à la fois du profil de la collerette d'accrochage C, du diamètre interne de la partie en saillie de la bande 2 au niveau du jonc 20 et de la hauteur de la partie de ladite bande située sous la face supérieure 20a du jonc 20.

Cet angle α est déterminé de façon à ce que la déformation contrôlée de la zone 22 se traduise par un fléchissement et un resserrement de la partie inférieure de la bande 2 vers l'axe du goulot.

La face supérieure du bossage 21 comporte au moins une dent 23 destinée à venir se loger temporairement dans un créneau 13 correspondant ménagé sur le bord inférieur de la paroi latérale du bouchon 1 lors du vissage final, quand le jonc 20 est déjà en butée sur la collerette d'accrochage du récipient.

Le nombre de dents 23 et de créneaux 13 sera fonction de la résistance mécanique de la zone de liaison 12 et de la surface horizontale totale de contact d'appui mutuel, nécessaire à la transmission de l'effort vertical d'encliquetage.

Cette surface est constituée de la somme des surfaces supérieures 23b des dents 23.

Bien entendu, selon d'autres modes de réalisation non représentés, c'est le bord inférieur de la paroi latérale du bouchon 1 qui comporte au moins une dent et la face supérieure du bossage 21 qui comporte au moins un créneau correspondant.De la même façon, on peut concevoir une alternance, sur la face supérieure du bossage 21, de dents et de créneaux. Eventuellement, on pourra ajouter une ou plusieurs dents complémentaires sur le bossage 21 sans qu'il soit prévu de créneau correspondant sur le bord inférieur du bouchon afin d'augmenter la surface totale d'appui horizontale pour l'encliquetage.

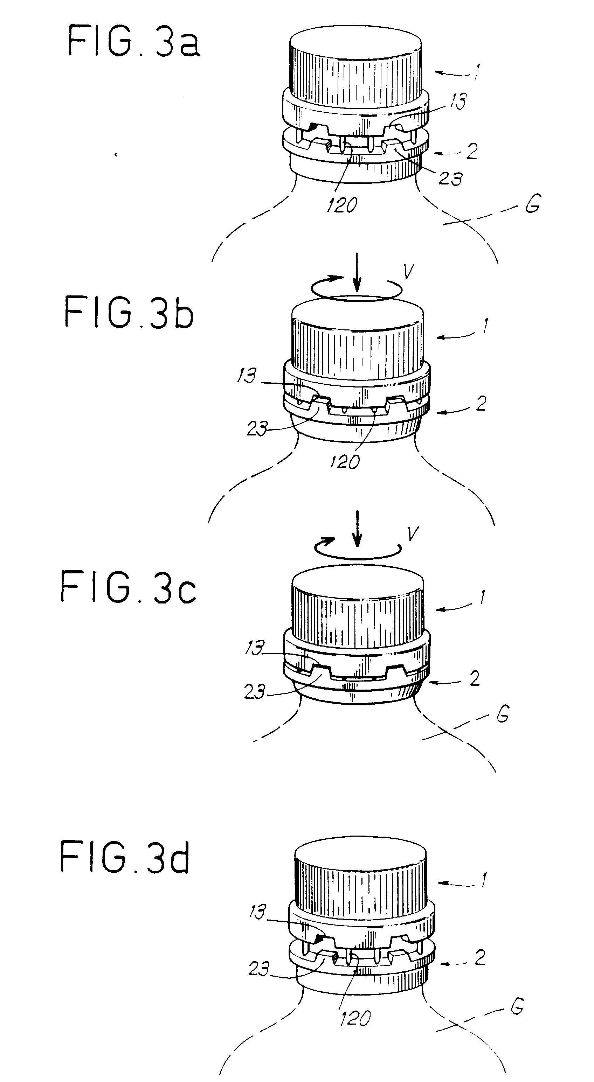

Les figures 3a,3b,3c et 3d illustrent la première mise en place du bouchon sur le goulot fileté G (représenté figure 4) d'un récipient après son remplissage sur la ligne de conditionnement.

Dans un premier temps, le jonc 20 vient par sa face inférieure interne 20b en butée sur la collerette d'accrochage C du récipient G (représentée sur les figures 4, 5 et 6).

Dans un deuxième temps, la poursuite du vissage forcé à partir de cette position de blocage provoque d'abord la compression de la zone de liaison 12 puis d'une part la déformation élastique du jonc 20 et d'autre part la déformation contrôlée de la zone 22.

Au cours de cette phase, les pontets 120 subissent une déformation élastique du fait du déplacement relatif du corps du bouchon 1 par rapport à la bande 2. Cette déformation consiste en une flexion transversale dans le sens du vissage V qui a pour effet de réduire la distance séparant la partie inférieure du bouchon de la partie supérieure de la bande . Cette flexion transversale se poursuit jusqu'à ce que les dents 23 pénètrent dans les créneaux 13. La hauteur des dents 23 est, à cet égard, en référence au sens de vissage V, déterminée de façon à ce que leur face latérale arrière 23a pénètre au moins partiellement dans le sens du vissage dans les créneaux 13 et soient en appui contre la face latérale arrière 13a desdits créneaux, avant d'atteindre la valeur limite de la résistance à la traction des pontets 120.

Cette valeur limite détermine le jeu maximal autorisé entre les faces latérales arrières 23a,13a en regard des dents 23 et des créneaux 13.

Il est clair que dans ces conditions, les faces avant respectives en regard des dents 23 et des créneaux 13 ne sont pas en contact et peuvent avoir ainsi un profil quelconque.

Les déformations précédentes se produisent du fait de la transmission de l'effort de compression vertical par contact des faces d'appui horizontales respectives 13b, 23b des créneaux 13 et des dents 23.

De plus, tout déplacement relatif du bouchon 1 par rapport à la bande 2 est évité par contact d'entraînement des faces d'appui latérales respectives 13a, 23a des créneaux 13 et des dents 23.

Par conséquent, le vissage forcé se traduit par la rotation solidaire de l'ensemble bouchon 1 / bande 2 sans contrainte de rupture des pontets 120..

Comme mentionné précédemment, cet effet de combinaison entre les dents 23 et les créneaux 13 protège la zone de liaison 12 d'une éventuelle rupture ou détérioration tout en permettant une fragilisation optimum.

L'ensemble de ces déformations élastiques conduit à l'effacement de l'extrémité interne du jonc 20 jusqu'à ce que la face inférieure inclinée 20b du jonc devienne sensiblement parallèle à l'axe du bouchon en épousant le profil extérieur de la collerette C.

Les pontets 120 ne subissent ainsi qu'une déformation limitée en flexion lors du vissage conduisant à l'encliquetage.

Puis, dans un troisième temps, les parties sous forte contrainte élastique se détendent dès que la face supérieure 20a du jonc 20 est passée sous la collerette d'accrochage C, ce qui provoque son encliquetage.

A la fin du vissage, les dents 23 se dégagent des créneaux 13 et la bande 2 n'est plus solidaire du bouchon 1 que par la zone de liaison 12 à faible résistance. Parallèlement à cela la zone à déformation contrôlée 22 tend à retrouver sa forme initiale en redressant la partie inférieure de la bande 2 de façon sensiblement parallèle à l'axe du goulot (voir aussi figures 5 et 6).

Il est clair que tout en recherchant à réaliser des pontets à faible résistance mécanique, il faut prévoir que les dimensions des dents 23 et/ou des créneaux 13 ainsi que leur jeu latéral respectif soient déterminés de façon à ce que les faces latérales arrières des dents, en référence au sens du vissage, pénètrent au moins partiellement dans lesdits créneaux et que les faces latérales desdites dents soient en appui contre les faces latérales arrières desdits créneaux avant d'atteindre la valeur limite de la résistance à la traction de la zone de liaison.

Les dents 23 sont disposées sur le pourtour de la bande 2 de façon à répartir régulièrement l'effort d'encliquetage.

Après encliquetage, tout dévissage entraîne la libération du bouchon 1 avec rupture de la zone de liaison 12. Une fois que le jonc 20 est encliqueté par passage sous la collerette C, l'inviolabilité est donc assurée.

De plus, le maintien du jonc 20 est facilité lorsque la largeur de sa face supérieure 20a est supérieure ou égale à la largeur de la collerette du récipient.

D'une manière générale, les nombres, la répartition des dents 23 et des créneaux 13 ainsi que le jeu vertical entre lesdites dents et lesdits créneaux et/ou le bord inférieur du bouchon sont déterminés en fonction de la résistance mécanique de la zone de liaison et de leur surface horizontale respective de contact d'appui mutuel, nécessaire à la transmission de l'effort vertical d'encliquetage.

Dans une variante optimisée de réalisation telle que représentée sur la figure 4, on pourra prévoir d'augmenter vers l'intérieur la largeur du jonc 20 de telle manière que le rapport entre le diamètre intérieur de la partie en saillie dudit jonc et le diamètre extérieur du goulot G sous la collerette C permette, après encliquetage, de créer un léger fléchissement résiduel de la partie inférieure de la bande 2 vers l'axe du bouchon. Cette disposition permet d'optimiser l'inviolabilité.

Dans ces conditions, la face supérieure 20a du jonc 20 reste, même après encliquetage, inclinée vers le haut sous la collerette C à la façon d'un hameçon.

Selon une autre variante représentée sur la figure 5, le jonc 20 possède une face de raccordement 20c sensiblement verticale entre la face supérieure 20a et la face inférieure interne 20b pour rigidifier l'accrochage.

Selon encore une autre variante représentée sur la figure 6, la face inférieure interne 20b du jonc 20 s'étend dans un même plan incliné de l'extrémité en saillie jusqu'à l'extrémité inférieure de la bande 2 sans ligne d'inflexion.

## Revendications

1. Dispositif de bouchage pour récipient à goulot fileté (G) comprenant un bouchon (1) taraudé et une bande d'inviolabilité (2), des pontets (120) parallèles à l'axe du bouchon reliant la partie inférieure du bouchon (1) à la bande d'inviolabilité (2), cette bande d'inviolabilité (2) comprenant :
- un jonc annulaire interne (20), élastiquement déformable, destiné à venir s'encliqueter sous une collerette d'accrochage (C) ménagée à la périphérie inférieure du goulot fileté (G) par vissage forcé (V) du bouchon (1), la face inférieure interne (20b) dudit jonc (20) étant inclinée d'un angle (α) par rapport à l'axe du bouchon (1),
- un bossage périphérique externe (21), séparé du jonc annulaire interne (20) par une zone (22) à déformation élastique contrôlée,
ledit dispositif étant caractérisé en ce que :
- tous les pontets (120) sont prévus entre la face inférieure du bouchon (1) et la face supérieure du bossage (21) ;
- la face supérieure du bossage (21) et le bord inférieur de la paroi latérale du bouchon (1) comportent au moins une dent (23) et/ou au moins un créneau (13), cette dent (23) étant destinée à venir se loger temporairement dans ce créneau (13) lors du vissage (V) quant le jonc annulaire interne (20) est en butée sur la collerette d'accrochage (C),
- l'angle (α) est déterminé de façon à ce que la déformation de la zone (22) se traduise par un fléchissement et un resserrement de la partie inférieure de la bande (2) vers l'axe du goulot (G),
la transmission de l'effort d'encliquetage provoquant la flexion transversale des pontets (120) dans le sens du vissage (V).

2. Dispositif selon la revendication 1, caractérisé en ce que la face supérieure (20a) du jonc (20) est sensiblement normale à l'axe du bouchon (1) et de largeur supérieure ou égale à la largeur de la collerette (C) du récipient.

3. Dispositif selon la revendication 1 ou 2, caractérisé en ce que la zone (22) à déformation élastique contrôlée possède une face interne (22a) ayant une courbure et/ou une inclinaison (β) par rapport à l'axe du bouchon (1).

4. Dispositif selon l'une des revendications précédentes, caractérisé en ce que le jonc (20) possède une face de raccordement (20c) sensiblement verticale entre la face supérieure (20a) et la face inférieure interne (20b).

5. Dispositif selon l'une quelconque des revendications précédentes, caractérisé en ce que la face inférieure interne (20b) du jonc (20) comporte une ligne d'inflexion (20d) .

6. Dispositif selon l'une quelconque des revendications précédentes, caractérisé en ce que le pourtour dudit jonc (20) comporte une ou plusieurs interruptions.

7. Dispositif selon l'une quelconque des revendications précédentes, caractérisé en ce que les dimensions de la dent (23) et/ou du créneau (13) ainsi que leur jeu latéral respectif sont déterminés de façon à ce que la face latérale arrière (23a) de la dent (23) en référence au sens du vissage (V) pénètre au moins partiellement dans ledit créneau (13) avant d'atteindre la valeur limite de la résistance à la traction des pontets (120).

8. Dispositif selon l'une quelconque des revendications précédentes, caractérisé en ce que les nombres et la répartition des dents (23) et des créneaux (13) ainsi que leur jeu vertical respectif sont déterminés en fonction de la résistance mécanique des pontets (120) et de leur surface horizontale respective (23b, 13b) de contact d'appui mutuel, nécessaire à la transmission de l'effort vertical d'encliquetage.

## Patentansprüche

1. Verschlussvorrichtung für Behälter mit Gewindehals (G), mit einem Verschluss (1) mit Innengewinde und einem Unverletzbarkeitsstreifen (2), wobei parallel zur Achse des Verschlusses angeordnete Brücken (120) den unteren Teil des Verschlusses (1) mit dem Unverletzbarkeitsstreifen (2) verbinden, wobei dieser Unverletzbarkeitsstreifen (2) umfasst:
- einen elastisch verformbaren, internen Ring (20), der sich unter einem Einrastkragen (C) einklinken soll, der am unteren Umfang des Gewindehalses (G) durch forciertes Festschrauben (V) des Verschlusses (1) angebracht ist, wobei die untere interne Seite (20b) des besagten Rings (20) um einen Winkel (α) in Bezug auf die Achse des Verschlusses (1) geneigt ist,
- einen peripheren externen Buckel (21), der durch eine kontrolliert elastisch verformbare Zone (22) vom internen Ring (20) getrennt ist,
wobei die besagte Vorrichtung dadurch gekennzeichnet ist, dass:
- alle Brücken (120) zwischen der Unterseite des Verschlusses (1) und der Oberseite des Buckels (21) vorgesehen sind;
- die Oberseite des Buckels (21) und der Unterrand der Seitenwand des Verschlusses (1) mindestens einen Zahn (23) und/oder mindestens eine Lücke (13) umfassen, wobei sich dieser Zahn (23) beim Verschrauben (V) zeitweise in diese Lücke (13) einfügen soll, wenn sich der interne Ring (20) am Anschlag gegen den Einrastkragen (C) befindet,
- der Winkel (α) so bestimmt ist, dass sich die Verformung der Zone (22) in einem Durchbiegen und einem Zusammenziehen des unteren Teils des Streifens (2) zur Achse des Halses (G) hin äussert,
wobei die Übertragung der Einrastkraft die Querbiegung der Brücken (120) in Richtung der Verschraubung (V) bewirkt.

2. Vorrichtung nach Anspruch 1, dadurch gekennzeichnet, dass die obere Seite (20a) des Rings (20) etwa normal zur Achse des Verschlusses (1) verläuft und eine Breite aufweist, die grösser oder gleich der Breite des Kragens (C) des Behälters ist.

3. Vorrichtung nach Anspruch 1 oder 2, dadurch gekennzeichnet, dass die kontrolliert elastisch verformbare Zone (22) eine Innenseite (22a) besitzt, die eine Krümmung und/oder eine Neigung (β) in Bezug auf die Achse des Verschlusses (1) aufweist.

4. Vorrichtung nach einem der vorstehend genannten Ansprüche, dadurch gekennzeichnet, dass der Ring (20) eine etwa vertikale Anschlusseite (20c) zwischen der oberen Seite (20a) und der internen unteren Seite (20b) besitzt.

5. Vorrichtung nach einem der vorstehend genannten Ansprüche, dadurch gekennzeichnet, dass die interne untere Seite (20b) des Rings (20) eine Inflexionslinie (20d) aufweist.

6. Vorrichtung nach einem der vorstehend genannten Ansprüche, dadurch gekennzeichnet, dass der äussere Umfang des besagten Rings (20) eine oder mehrere Unterbrechungen umfasst.

7. Vorrichtung nach einem der vorstehend genannten Ansprüche, dadurch gekennzeichnet, dass die Abmessungen des Zahns (23) und/oder der Lücke (13) sowie ihr jeweiliges seitliches Spiel so bestimmt sind, dass die hintere Seitenfläche (23a) des Zahns (23) in Bezug auf die Richtung der Verschraubung (V) zumindest teilweise in die besagte Lücke (13) eindringt, bevor sie den Grenzwert der Zugfestigkeit der Brücken (120) erreicht.

8. Vorrichtung nach einem der vorstehend genannten Ansprüche, dadurch gekennzeichnet, dass die Anzahlen und die Verteilung der Zähne (23) und Lücken (13) sowie ihr jeweiliges vertikales Spiel entsprechend der mechanischen Festigkeit der Brücken (120) und ihrer jeweiligen norizontaien Oberfläche (23b, 13b) für den gegenseitigen, für die Übertragung der vertikalen Einrastkraft erforderlichen Stützkontakt bestimmt werden.

## Claims

1. A stopper device for a receptacle with a threaded neck (G) comprising a threaded stopper (1) and a tamper-evident band (2), bridges (120) parallel to the axis of the neck connecting the bottom part of the stopper (1) to the tamper-evident band (2), this tamper-evident band (2) comprising:
- an elastically deformable internal annular circlip (20), intended to snap under an attachment flange (C) arranged at the lower periphery of the threaded neck (G) by forced screwing (V) of the stopper (1), the internal bottom face (20b) of the said circlip (20) being inclined at an angle (a) with respect to the axis of the stopper (1),
- an external peripheral protrusion (21), separated from the internal annular circlip (20) by an area (22) with controlled elastic deformation, the said device being characterised in that:
- all the bridges (120) are provided between the bottom face of the stopper (1) and the top face of the protrusion (21);
- the top face of the protrusion (21) and the bottom edge of the side wall of the stopper (1) have at least one tooth (23) and/or at least one indentation (13), this tooth (23) being intended to come to be housed temporarily in the said indentation (13) during screwing (V) when the internal annular circlip (20) is in abutment on the attachment flange (C),
- the angle (a) is determined so that the deformation of the area (22) results in a flexing and contraction of the bottom part of the band (2) towards the axis of the neck (G),
the transmission of the snapping-on force causing the transverse flexing of the bridges (120) in the direction of the screwing (V).

2. A device according to claim 1, characterised in that the top face (20a) of the circlip (20) is substantially normal to the axis of the neck (1) and has a width greater than or equal to the width of the flange (c) on the receptacle.

3. A device according to claim 1 or 2, characterised in that the area (22) with controlled elastic deformation has an internal face (22a) having a curvature and/or inclination (b) with respect to the axis of the stopper (1).

4. A device according to one of the preceding claims, characterised in that the circlip (20) has a substantially vertical connection face (20c) between the top face (20a) and the internal bottom face (20b).

5. A device according to any one of the preceding claims, characterised in that the internal bottom face (20b) of the circlip (20) has an inflexion line (20d).

6. A device according to any one of the preceding claims, characterised in that the circumference of the said circlip (20) has one or more breaks.

7. A device according to any one of the preceding claims, characterised in that the dimensions of the tooth (23) and/or of the indentation (13) as well as their respective side clearance are determined so that the rear side face (23a) of the tooth (23) with reference to the direction of the screwing (V) at least partially enters the said indentation (13) before reaching the limit value of the tensile strength of the bridges (120).

8. A device according to any one of the preceding claims, characterised in that the numbers and distribution of the teeth (23) and indentations (13) as well as their respective vertical clearance are determined according to the mechanical strength of the bridges (120) and their respective horizontal mutual bearing contact surface (23b, 13b) necessary for the transmission of the vertical snapping-on force.
